# EUROPEAN PATENT SPECIFICATION

(11) **EP 4 647 340 B1**
(45) Date of publication and mention of the grant of the patent: **11.11.2026**
(21) Application number: 25204414.4
(22) Date of filing: 16.09.2024
(51) Int. Cl.: B64D 27/18, B64D 27/40

(54) **ENGINE MOUNT FITTING**
MOTORLAGERBESCHLAG
RACCORD DE MONTAGE DE MOTEUR

(30) Priority: 26.09.2023 US 202363540434 P; 03.09.2024 US 202418822797
(43) Date of publication of application: 12.11.2025
(62) Document number(s) of the earlier application(s) in accordance with Art. 76 EPC: 24200507.2 / 4 530 193
(73) Proprietor: The Boeing Company, Arlington, VA 22202 (US)
(72) Inventor: Powell, Donald Thomas, Arlington, 22202 (US); Stanescu, Adrian, Arlington, 22202 (US); Palma, Druh Saul, Arlington, 22202 (US); Stevens, Kyle David, Arlington, 22202 (US)
(74) Representative: Witte, Weller & Partner Patentanwälte mbB

(56) References cited:
- CN-B- 107 512 399
- US-A1- 2009 212 155
- US-A1- 2020 031 482
- US-B2- 11 679 888

## Description

### TECHNOLOGICAL FIELD

The present disclosure relates generally to the field of engine mounts for aircraft and, more specifically, to engine mounts constructed from multiple sections to facilitate attachment of the engine to a wing of an aircraft.

### BACKGROUND

Certain aircraft include wings with structural members that support an engine. The structural member is designed to support and securely connect the engine to the aircraft. Because of the position of the structural member relative to the engine, the structural member affects the air flow and thus the operation of the engine. The aerodynamics of the structural member has greater effect in aircraft with particular engines, such as those that include exposed blades. One type is an unducted turbofan engine that includes exposed fan blades in combination with a gas turbine engine. The fan aerodynamics become highly sensitive to the shape and size of the structural member.

The design aspects of the structural member are generally something of a compromise between the aerodynamic and structural requirements. The aerodynamic needs prefer that the structural member be small and unobtrusive to reduce aerodynamic drag. The structural needs require that the structural member have adequate size and dimensions to support the engine.

Thus, there is a need for a structural member that effectively mounts an engine to an aircraft and also includes an effective aerodynamic design.

Document CN 107 512 399 B states, according to its abstract, that a box-like beam-type engine main installation connector is used for connecting an engine and a hanging box section and transmitting loads. The box-like beam-type engine main installation connector comprises an upper beam web, a left supporting arm, a right supporting arm, a lower beam web and a butt-joint plate, wherein the two sides of the two beam webs are fixed to the two sides of the two supporting arms; one side of the main installation connector is fixed to the hanging box section through an upper chord of the upper beam web, a fixing chord of the left supporting arm and a fixing chord of the right supporting arm; the other side of the main installation connector is fixed to the engine through the butt-joint plate connected with the left supporting arm and the right supporting arm; the butt-joint plate is provided with thrust pins and butt-joint bolts; the thrust pins are fixed to the butt-joint plate and the two supporting arms in the heading direction and the lateral direction of an airplane in order to realize transmission of the loads in the heading direction and the lateral direction; and the butt-joint bolts are fixed to the butt-joint plate and the two supporting arms in the vertical direction of the airplane in order to realize transmission of vertical loads.

Document US 2009/212155 A1 states, according to its abstract, that a load-bearing structure, such as a pylon or strut, comprises a monolithic tubular-shaped first central structure composed of composite material and a plurality of metal fittings for supporting an engine on an airframe structure of an aircraft, such as a wing. Most of the fittings are integrated into the load-bearing structure through bonding. The metal fittings carry the high bearing loads that are transmitted into the pylon at the engine-pylon and wing-pylon interfaces. The load-bearing structure may also comprise a second central structure of a tubular shape composed of composite material and integrated with one end portion of the first central structure by bonding and/or mechanical fastening means.

Document US 2020/031482 A1 states, according to its abstract, that an assembly for an aircraft has a pylon having a mounting plate having a front face and a rear face and through which there passes, between the front face and the rear face, at least one central bore, a front engine mount comprising a spar with a rear face bearing against the mounting plate front face and which, for each central bore, has a complementary central bore aligned with the central bore, and for each central bore, a mounting system. The mounting system comprises a shear pin inserted into the central bore and the complementary central bore from the rear face with a flange bearing against the rear face, a support with a central hole, the diameter of which is greater than the flange diameter and fixed to the rear face, and a cap fixed to the support closing off the central hole and bearing against the shear pin.

Document US 11 679 888 B2 states, according to its abstract, that a composite aircraft engine pylon comprises a frame, an aircraft attachment component, and an engine support. The frame includes an outer structural section and an inner structural section configured to at least partially nest with the outer structural section. The outer structural section and the inner structural section sandwich the airframe attachment component and the engine support to form double shear connections between the frame and the aircraft attachment component and between the frame and the engine support.

### SUMMARY

According to the present disclosure, a fitting as defined in the independent claim is provided. Further embodiments are defined in the dependent claims. Although the scope is only defined by the claims, the below embodiments, examples, and aspects are present for aiding in understanding the background and advantages.
For illustrative purposes, disclosed herein is a fitting to mount an engine to a wing of an aircraft. The fitting comprises a body with a first end and a second end. A first pocket is positioned at the first end with the first pocket sized to receive the forward engine mount fitting. A second pocket is positioned at the second end with the second pocket sized to receive a strut box of the wing of the aircraft. The body comprises a first section and a second section that are connected together.

Also, for illustrative purposes, it is disclosed herein that the first section and the second section abut together at a joint that extends along a length of the body.

Also, for illustrative purposes, it is disclosed herein that the body comprises a tapered shape that increases from the first end to the second end.

Also, for illustrative purposes, it is disclosed herein that the taper is consistent along the length from the first end to the second end.

Also, for illustrative purposes, it is disclosed herein that the first section is a mirror image of the second section.

Also, for illustrative purposes, it is disclosed herein that the first end is open to receive the forward engine mount fitting and the second end is open to receive the strut box.

Also, for illustrative purposes, it is disclosed herein that flanges extend along a first side of the body and an opposing second side of the body with the flanges comprising a central flange section and laterally-extending stiffeners that are spaced apart along a length of a central flange section.

Also, for illustrative purposes, it is disclosed herein that a first portion of the flanges are mounted to the first section and a second portion of the flanges are mounted to the second section.

Also, for illustrative purposes, it is disclosed herein that a receptacle is positioned along one side of the body with the receptacle comprising opposing lateral walls that extend outward from the side of the body and one or more ribs that extend between the lateral walls.

Also, for illustrative purposes, it is disclosed herein that ribs extend outward from inner sides of the first section and the second section with the ribs abutting together when the first section and the second section are connected together.

Also, for illustrative purposes, it is disclosed herein that the body comprises two or more flat sides.

One aspect is directed to a fitting to mount an engine to a wing of an aircraft. The fitting comprises a first section and a second section each comprising: a lateral side; a top side; a bottom side; and an inner side. The first section and the second section are configured to connect together along the inner sides to form a body with the body comprising: a first side formed by the lateral side of the first section; a second side formed by the lateral side of the second section; a third side formed by the top sides of the first section and the second section; and a fourth side formed by the bottom sides of the first section and the second section.

An interior space is positioned within the body with the interior space comprising a first pocket positioned at a first end of the body to receive a forward engine mount fitting and a second pocket positioned at a second end of the body to receive the strut box of the wing.

In another aspect, the first pocket and the second pocket are each surrounded by the first section and the second section.

In another aspect, the first section is a mirror image of the second section.

In another aspect, ribs extend outward from inner faces of the lateral sides of the first section and the second section with the ribs having exposed ends that abut together when the first section and the second section are connected together.

In another aspect, the lateral sides are flat to connect with brackets of an aft engine mount fittings.

In another aspect, flanges extend outward from the body and comprising a flange section and lateral stiffeners with the flanges configured to form a structural interface that takes both shear and tension.

In another aspect, fasteners that extend through and connect the first section to the second section.

In another aspect, the first section and the second section abut together with at a joint that extends longitudinally through the body.

Also, for illustrative purposes, disclosed herein is a method of attaching an engine to a wing of an aircraft. The method comprises: attaching a first fitting to a first section of an aft engine mount fitting of a ridgeback fitting; attaching a second fitting to a second section of the aft engine mount fitting of the ridgeback fitting and connecting together the first section and the second section of the ridgeback fitting; attaching a forward engine mount fitting to the ridgeback fitting; attaching the ridgeback fitting to a strut box on a wing of an aircraft; and attaching the engine to the forward engine mount fitting and to the first fitting and the second fitting of the aft engine mount fitting and thereby attaching the engine to the wing of the aircraft.

Also, for illustrative purposes, disclosed herein, the method further comprises positioning the forward engine mount fitting at first ends of the first section and the second section and then connecting together the first section and the second section of the ridgeback fitting and connecting the forward engine mount fitting to the ridgeback fitting.

Also, for illustrative purposes, disclosed herein, the method further comprises aligning a first section of flanges on the first section with a second section of flanges on the second section and connecting together the first section and the second section and forming a single flange that extends along a length of the ridgeback fitting.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft equipped with fittings to mount engines to the wings.
Figure 2 is a side view of a ridgeback fitting positioned at an end of a strut box and configured to mount the engine to the wing of an aircraft.
Figure 3 is an isometric view of a ridgeback fitting connected to a forward engine mount fitting and an aft engine mount fitting.
Figure 4 is a side view of the ridgeback fitting of Figure 3.
Figure 5 is a side view of an inner face of a first section of a ridgeback fitting.
Figure 6 is a schematic section of a forward engine mount fitting connected to an end of the ridgeback fitting with the view cut along line VI-VI of Figure 4.
Figure 7 is a bottom view of one example of a ridgeback fitting.
Figure 8 is a bottom view of another example of a ridgeback fitting.
Figure 9 illustrates a method of attaching an engine to a wing of an aircraft.

### DETAILED DESCRIPTION

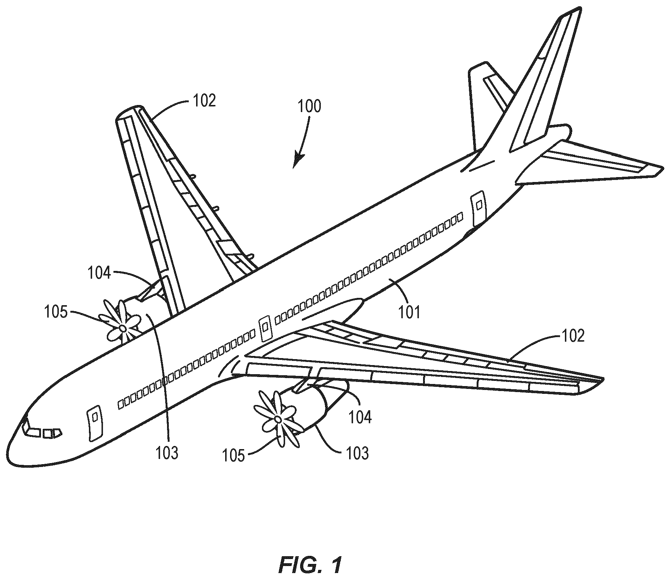

Figure 1 illustrates an aircraft 100 that includes a fuselage 101 and wings 102. Engines 103 are mounted to each of the wings 102. This particular aircraft 100 includes an engine 103 mounted to each of the wings 102, although the number and positioning of the engines 103 along the wings 102 can vary. The engines 103 are mounted under the wings 102 to an aerodynamic strut box 104. Various types of engines 103 can be used on the aircraft 100. In some examples, the engines 103 include exposed fan blades. One specific example is an unducted turbofan engine with an exposed fan 105.

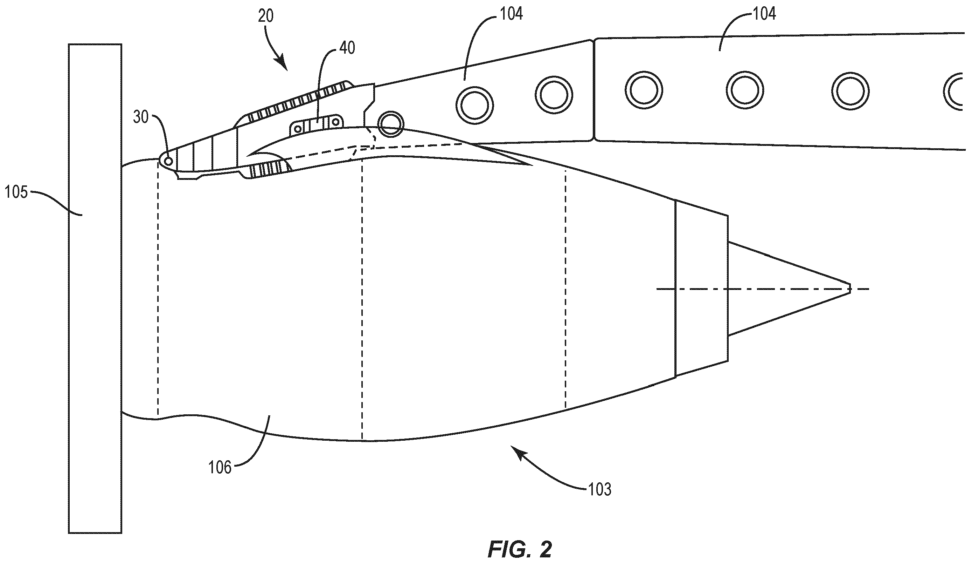

Figure 2 illustrates a side view of the engine 103 mounted to the strut box 104 of the wing 102. The strut box 104 includes a ridgeback fitting 20. The ridgeback fitting 20 is connected to a forward end of the strut box 104. The ridgeback fitting 20 connects to the engine 103 through a forward engine mount fitting 30 and an aft engine mount fitting 40. In the example of Figure 2 with the engine 103 being an unducted turbofan engine, both the forward engine mount fitting 30 and the aft engine mount fitting 40 connect to an engine fan frame 106 on the forward part of the engine 103. In one example, the forward engine mount fitting 30 and the aft engine mount fitting 40 are spaced apart along the engine 103 by about thirty inches.

The fan 105 of the engine 103 is positioned forward of the ridgeback fitting 20. Air that flows through the fan 105 passes by the ridgeback fitting 20 that is covered by an aerodynamic forward pylon fairing (not illustrated). The ridgeback fitting 20 is shaped to reduce impingement of the air flow on the fan 105. In some examples, the ridgeback fitting 20 is positioned directly behind a center of the fan 105.

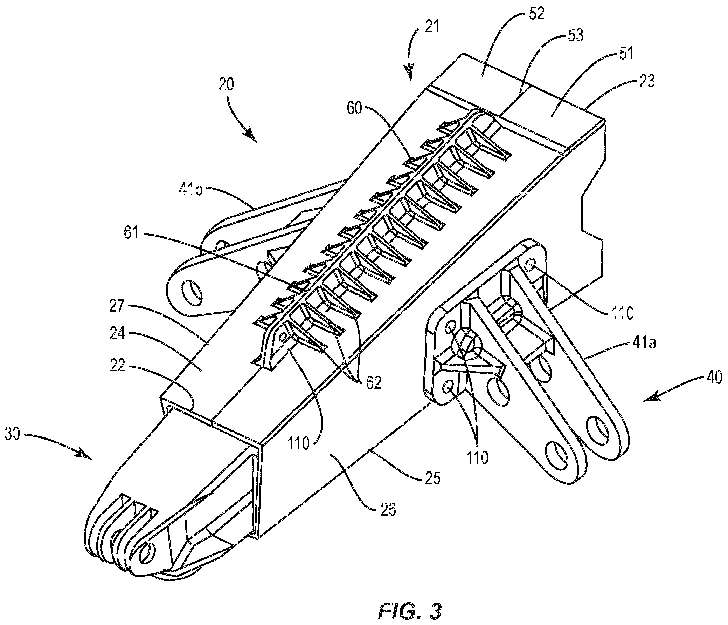

Figure 3 illustrates the ridgeback fitting 20 attached to the forward engine mount fitting 30 and the aft engine mount fitting 40. The ridgeback fitting 20 includes a body 21 having an elongated shape with a forward end 22 and a rear end 23. In some examples, the body 21 has a substantially rectangular sectional shape that includes four sides. The body 21 includes opposing top and bottom sides 24, 25 and opposing lateral sides 26, 27. One or more of the sides can be substantially flat as illustrated in Figure 3. This shape facilitates attachment of the aft mount fitting 40 and airflow. In some examples, one or more of the sides are open or have openings.

In some examples, the body 21 has a tapered shape with a smaller sectional area at the forward end 22 and a larger section area at the rear end 23. This tapered shape provides for transitioning between the strut box that connects to the rear end 23 and the forward engine mount fitting 30 that connects to the forward end 22. The tapered shape also facilitates airflow. In some examples, the taper is consistent along the length from the forward end 22 to the rear end 23.

The body 21 is formed from two sections 51, 52 that abut together and form a joint 53. In some examples, the two sections 51, 52 have a clamshell design that align together. The two sections 51, 52 include exposed edges along an inner side that abut together to form the joint 53. In some examples, each of the sections 51, 52 is substantially equal and forms one-half of the ridgeback fitting 20. In one specific example, the sections 51, 52 are mirror images. In some examples, the sections 51, 52 have different shapes and/or sizes with one of the sections 51, 52 being larger than the other.

An advantage of the body 21 formed by the two sections 51, 52 is the ability to access the interior sides prior to them being connected together. This provides for accessing fasteners 110 that are used to connect one or more of the forward engine mount fitting 30 and aft engine mount fitting 40. This overcomes a current issue with the inability to access these fasteners within an enclosed interior of the strut box (which are often referred to as "blind fasteners").

In some examples as illustrated in Figure 3, each section 51, 52 includes a respective lateral side 26, 27 and a portion of the top side 24 and the bottom side 25. In one example as illustrated in Figure 3, each section 51, 52 forms one-half of the top side 24 and the bottom side 25. The two sections 51, 52 abut together along a joint 53 that extends longitudinally through the body 21. The exposed edges of the sections 51, 52 abut together when connected. In some examples, the edges are flat and aligned to abut together in a non-overlapping configuration. In some examples, the edges are configured to overlap when abutted together. One specific example includes the exposed edges configured to form a lap joint.

Flanges 60 extend along one or more sides of the body 21. The flanges 60 are configured to form a structural interface that takes both shear and tensions loads across the joint 53. The flanges 60 are positioned along one or more of the sides of the ridgeback fitting 20. In some examples, flanges 60 are positioned along the top side 24 and the bottom side 25. In some examples, the ridgeback fitting 20 does not include flanges 60.

The flanges 60 include a central flange section 61 and stiffeners 62 that are spaced apart along the flange section 61. The stiffeners 62 extend laterally outward away from the flange section 61 and have a tapering height that decreases away from the flange section 61. The stiffeners 62 structurally support the flange section 61. The flange section 61 includes leading and trailing ends that are tapered to improve structural load distribution. In examples with flanges 60 on two or more of the sides of the ridgeback fitting 20, the flanges 60 can have the same or different configurations. In some examples, the flanges 60 are symmetrical about a centerline that extends along the flange section 61.

In some examples, the flanges 60 are divided between the first section 51 and the second section 52. Each of the sections 51, 52 includes a portion of the flange section 61 and one set of the stiffeners 62. When the sections 51, 52 are abutted together, the opposing flange sections abut together and form a single flange section 61.

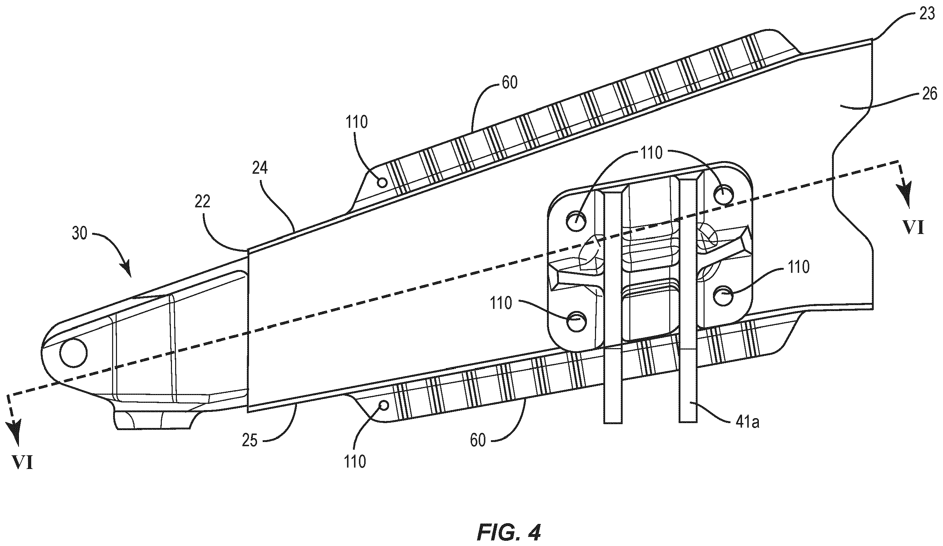

The two sections 51, 52 are connected together by fasteners 110. The fasteners 110 extend through the two sections 51, 52 and bridge the joint 53. In one example as illustrated in Figures 3 and 4, each of the sections 51, 52 includes a portion of the flange section 61. The fasteners 110 extend through the flange sections 61 and connect the sections 51, 52 together. In this configuration, the fasteners 110 are aligned perpendicular to the joint 53.

An interior space 29 is formed within the ridgeback fitting 20. The two sections 51, 52 can be designed to have various numbers and arrangements of ribs and pocket configurations. The sections 51, 52 are designed to optimize the load distribution in the ridgeback fitting 20 itself when reacting to engine mount interface loads between the engine 103 and the strut box 104.

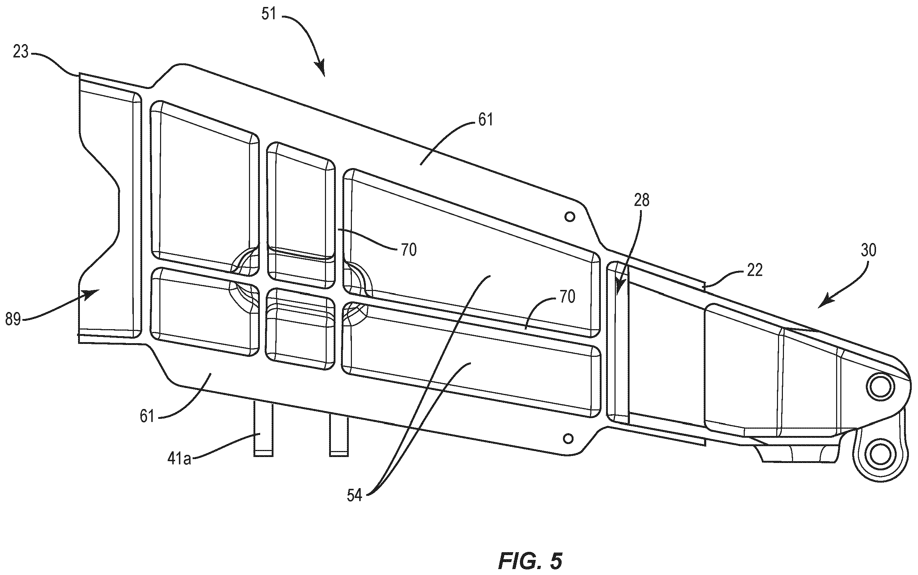

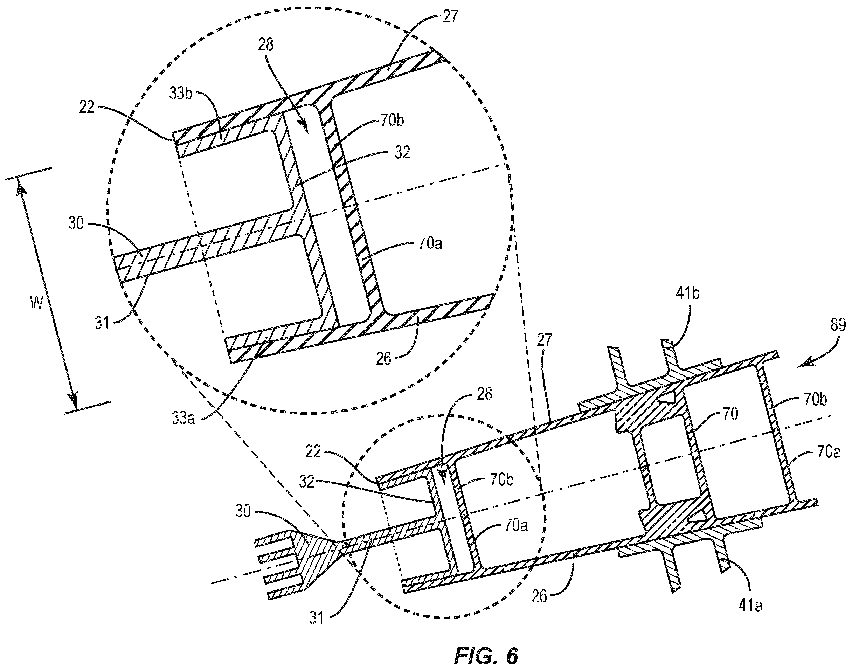

Figures 5 and 6 illustrate aspects of the interior space 29. The interior space 29 includes a pocket 28 at the forward end 22 that is open to receive the forward engine mount fitting 30. Figures 5 and 6 illustrate examples of the pocket 28 positioned at the forward end 22 and sized to receive the forward engine mount fitting 30. The pocket 28 has a width W measured between opposing sides. In some examples, the width W decreases towards the forward end 22. In some examples, the forward engine mount fitting 30 includes a tapered shape that corresponds to the tapered width W of the pocket 28. These corresponding shapes maintain the forward engine mount fitting 30 attached to the ridgeback fitting 20 and prevent inadvertent detachment from the forward end 22. In some examples, the thickness of the flanges 33a, 33b are different such that the width W of the pocket 28 is constant and the forward engine mount fitting 30 is not captive when the two halves are joined together. Additionally or alternatively, one or more fasteners 110 connect the forward engine mount fitting 30 to the ridgeback fitting 20.

One or more ribs 70 extend outward from opposing sides and across the interior space 29. The ribs 70 provide strength and stiffness to the ridgeback fitting 20. In some examples, the ribs 70 extend between the opposing lateral sides 26, 27. The ribs 70 are formed from different sections that extend outward from the sides of the different sections 51, 52. When the sections 51, 52 are connected together, the ribs 70 on each of the sections align and abut together.

Figure 5 illustrates the inner side of section 51. Ribs 70 are positioned in different orientations that extend outward from the inner face of the lateral side 26. Pockets 54 are formed at the ribs 70. The second section 52 (not illustrated) would include ribs with a similar arrangement such that the ribs abut together when the sections 51, 52 are connected together. The configuration of the rib 70 can vary to accommodate different engine mount configurations and is subject to optimization.

The interior space 29 also includes a pocket 89 at the rear end 23. The pocket 89 is sized to receive the strut box 104. In some examples, one or more fasteners 110 connect the strut box 104 to the pocket 89 of the ridgeback fitting 20.

The ridgeback fitting 20 is configured to be connected to the aft engine mount fitting 40 which in turn connects to the engine 103. The aft engine mount fitting 40 includes fittings 41 that are mounted to the lateral sides 26, 27 of the ridgeback fitting 20. Fasteners 110 connect the fittings 41 to the ridgeback fitting 20.

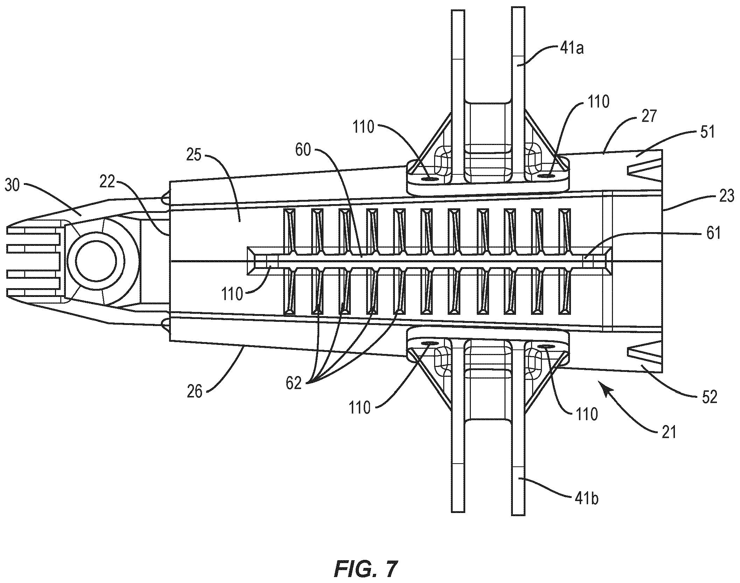

Figure 7 illustrates a bottom view of one example of a ridgeback fitting 20. Fittings 41a, 41b are connected respectively to the opposing lateral sides 26, 27. Fasteners 110 extend through the fittings 41a, 41b and the lateral sides 26, 27 and into the interior space 29 within the ridgeback fitting 20.

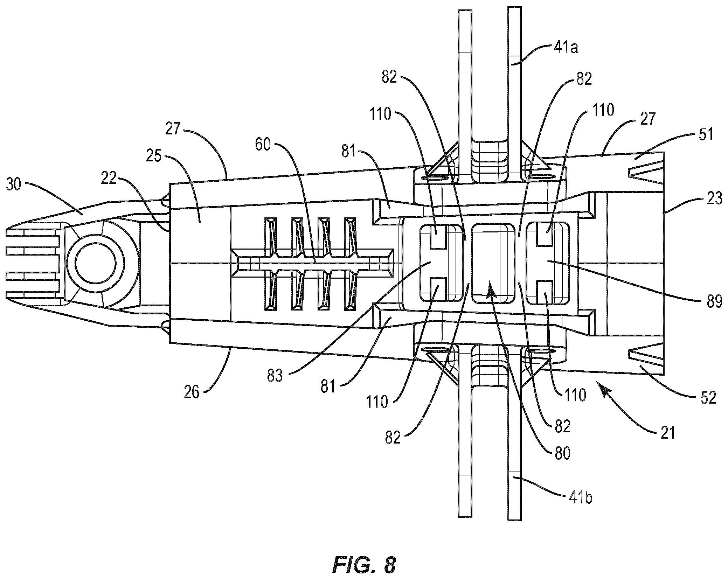

Figure 8 illustrates a bottom view of another example of a ridgeback fitting 20. The bottom side 25 includes a receptacle 80 is positioned to receive the fasteners 110 that connect the fittings 41a, 41b. The receptacle 80 includes lateral walls 81 that extend along the length where the fittings 41a, 41b connect. Receptacle 80 is designed to allow the fasteners 110 interface between the fittings 41a, 41b and lateral sides 26, 27 to extend below the bottom side 25. The receptacle 80 also includes central ribs 82 that span across the gap between the lateral walls 81. Gaps 83 are formed between the lateral walls 81 and ribs 82. In some examples, the receptacle 80 is a separate fitting that engages with the first and second sections 51, 52 and spans between the two fittings 41a, 41b. In other examples, the receptacle 80 is an integral part of the first and second sections 51, 52. The fasteners 110 extend through the lateral sides 26, 27 and lateral walls 81 and into the gaps 83. In one example, the fasteners 110 include shear pins.

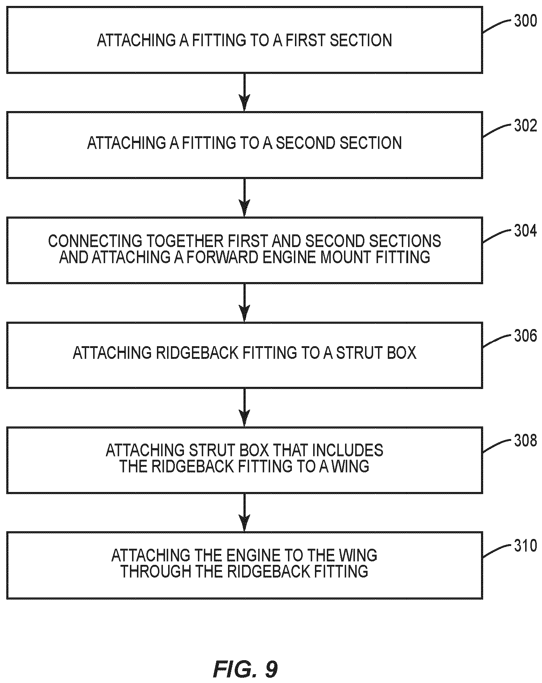

Figure 9 illustrates a method of attaching an engine 103 to a wing 102 of an aircraft 100. A first fitting 41a of an aft engine mount fitting 40 is attached to a first section 51 of a ridgeback fitting 20 (block 300). A second fitting 41b is attached to a second section 52 of the ridgeback fitting 20 (block 302). The first section 51 and the second section 52 are connected to the forward engine mount fitting 30 (block 304). In some examples, the forward engine mount fitting 30 is positioned between the two separated sections 51, 52. The sections 51, 52 are then connected together thus attaching the forward engine mount fitting 30 to the ridgeback fitting 20. The ridgeback fitting 20 is attached to a strut box 104 (block 306). The strut box 104, including the ridgeback fitting 20, is installed on a wing 102 (block 308). The engine 103 is attached to the wing 102 by attaching to the forward mount fitting 30 and to the aft engine mount fitting 40 (block 310).

The ridgeback fitting 20 can be used to connect a variety of different engines 103 to a wing 102 of an aircraft 100. In some examples, the engines 103 have exposed fan blades. One specific example is an unducted turbofan engine. In other examples, the engine 103 includes ducted fans.

Various types of fasteners 110 are used for connecting the sections 51, 52 and connecting the forward engine mount fitting 30 and/or aft engine mount fitting 40. Examples include but are not limited to rivets, pins, nuts/bolts, and pegs.

By the term "substantially" with reference to amounts or measurement values, it is meant that the recited characteristic, parameter, or value need not be achieved exactly. Rather, deviations or variations, including, for example, tolerances, measurement error, measurement accuracy limitations, and other factors known to those skilled in the art, may occur in amounts that do not preclude the effect that the characteristic was intended to provide.

The present disclosure may be carried out in other ways than those specifically set forth herein without departing from essential characteristics of the invention. The present embodiments are to be considered in all respects as illustrative and not restrictive, and all changes coming within the meaning of the appended claims are intended to be embraced therein.

## Claims

1. A fitting (20) to mount an engine (103) to a wing (102) of an aircraft, the fitting (20) comprising:
a first section (51) and a second section (52) each comprising:
a lateral side;
a top side;
a bottom side;
an inner side;
wherein the first section (51) and the second section (52) are configured to connect together along the inner sides to form a body (21) with the body (21) comprising:
a first side formed by the lateral side of the first section (51);
a second side formed by the lateral side of the second section (52);
a third side formed by the top sides of the first section (51) and the second section (52); and
a fourth side formed by the bottom sides of the first section (51) and the second section (52),
the fitting (20) further comprising an interior space (29) positioned within the body (21), the interior space comprising a first pocket (28) positioned at a first end of the body (21) to receive a forward engine mount fitting (30) and a second pocket (89) positioned at a second end of the body (21) to receive a strut box (104) of the wing (102).

2. The fitting (20) of claim 1, wherein the first pocket (28) and the second pocket (89) are each surrounded by the first section (51) and the second section (52).

3. The fitting (20) of claim 1 or 2, wherein the first section (51) is a mirror image of the second section (52).

4. The fitting (20) of any of claims 1 to 3, further comprising ribs (70) that extend outward from inner faces of the lateral sides of the first section (51) and the second section (52), the ribs (70) having exposed ends that abut together when the first section (51) and the second section (52) are connected together.

5. The fitting (20) of claim 4, wherein the ribs (70) extend outward from opposing sides and across the interior space (29).

6. The fitting (20) of claim 4 or 5, wherein the ribs (70) are positioned in different orientations that extend outward from the inner face of the lateral side (26) of the first section (51), wherein pockets (54) are formed at the ribs (70).

7. The fitting (20) of any of claims 1 to 6, further comprising flanges (60) that extend outward from the body (21) and comprising a flange section (61) and lateral stiffeners (62), the flanges (60) are configured to form a structural interface that takes both shear and tension.

8. The fitting (20) of claim 7, wherein the flanges (60) are divided between the first section (51) and the second section (52), each of the sections (51, 52) includes a portion of the flange section (61) and one set of the stiffeners (62), and when the sections (51, 52) are abutted together, the opposing flange sections abut together and form a single flange section (61).

9. The fitting (20) of claim 7 or 8, wherein the stiffeners (62) are spaced apart along the flange section (61), wherein the stiffeners (62) extend laterally outward away from the flange section (61) and have a tapering height that decreases away from the flange section (61).

10. The fitting (20) of any of claims 1 to 9, further comprising a joint (53) wherein the first section (51) and the second section (52) abut together with the joint (53) extending longitudinally through the body (21).

11. The fitting (20) of claim 10, wherein flanges (60) extend along one or more sides of the body (21), wherein the flanges (60) are configured to form a structural interface that takes both shear and tensions loads across the joint (53).

12. The fitting (20) of any of claims 1 to 11, wherein the first pocket (28) has a width (W) measured between opposing sides, wherein the width (W) decreases towards the forward end (22).

13. The fitting (20) of any of claims 1 to 12, wherein the lateral sides are flat to connect with brackets of an aft engine mount fitting (40).

14. The fitting (20) of any of claims 1 to 13, the fitting (20) further comprising fasteners (110) that extend through and connect the first section (51) to the second section (52).

15. The fitting (20) of any of claims 1 to 14, wherein the fasteners (110) extend through the first and second sections (51, 52) and bridge the joint (53), each of the sections (51, 52) includes a portion of a flange section (61), the fasteners (110) extend through the flange sections (61) and connect the sections (51, 52) together, and the fasteners (110) are aligned perpendicular to the joint (53).

## Patentansprüche

1. Beschlag (20) zum Anbringen eines Triebwerks (103) an einem Flügel (102) eines Luftfahrzeugs, wobei der Beschlag (20) aufweist:
einen ersten Abschnitt (51) und einen zweiten Abschnitt (52), die jeweils aufweisen:
eine laterale Seite;
eine Oberseite;
eine Unterseite;
eine Innenseite;
wobei der erste Abschnitt (51) und der zweite Abschnitt (52) eingerichtet sind, sich entlang der Innenseiten miteinander zu verbinden, um einen Körper (21) zu bilden, wobei der Körper (21) aufweist:
eine erste Seite, die durch die laterale Seite des ersten Abschnitts (51) gebildet ist;
eine zweite Seite, die durch die laterale Seite des zweiten Abschnitts (52) gebildet ist;
eine dritte Seite, die durch die Oberseiten des ersten Abschnitts (51) und des zweiten Abschnitts (52) gebildet ist; und
eine vierte Seite, die durch die Unterseiten des ersten Abschnitts (51) und des zweiten Abschnitts (52) gebildet ist,
wobei der Beschlag (20) ferner einen Innenraum (29) aufweist, der innerhalb des Körpers (21) positioniert ist, wobei der Innenraum eine erste Tasche (28), die bei einem ersten Ende des Körpers (21) positioniert ist, um einen vorderen Triebwerksbefestigungsbeschlag (30) aufzunehmen, und eine zweite Tasche (89) aufweist, die bei einem zweiten Ende des Körpers (21) positioniert ist, um einen Strebenkasten (104) des Flügels (102) aufzunehmen.

2. Beschlag (20) nach Anspruch 1, wobei die erste Tasche (28) und die zweite Tasche (89) jeweils von dem ersten Abschnitt (51) und dem zweiten Abschnitt (52) umgeben sind.

3. Beschlag (20) nach Anspruch 1 oder 2, wobei der erste Abschnitt (51) ein Spiegelbild des zweiten Abschnitts (52) ist.

4. Beschlag (20) nach einem der Ansprüche 1 bis 3, der ferner Rippen (70) aufweist, die sich von Innenflächen der lateralen Seiten des ersten Abschnitts (51) und des zweiten Abschnitts (52) nach außen erstrecken, wobei die Rippen (70) freiliegende Enden aufweisen, die aneinanderstoßen, wenn der erste Abschnitt (51) und der zweite Abschnitt (52) miteinander verbunden sind.

5. Beschlag (20) nach Anspruch 4, wobei sich die Rippen (70) von gegenüberliegenden Seiten und über den Innenraum (29) nach außen erstrecken.

6. Beschlag (20) nach Anspruch 4 oder 5, wobei die Rippen (70) in unterschiedlichen Ausrichtungen positioniert sind, die sich von der Innenfläche der lateralen Seite (26) des ersten Abschnitts (51) nach außen erstrecken, wobei an den Rippen (70) Taschen (54) gebildet sind.

7. Beschlag (20) nach einem der Ansprüche 1 bis 6, der ferner Flansche (60) aufweist, die sich von dem Körper (21) nach außen erstrecken und die einen Flanschabschnitt (61) und laterale Versteifungen (62) aufweisen, wobei die Flansche (60) eingerichtet sind, eine strukturelle Schnittstelle zu bilden, die sowohl Schub als auch Zug aufnimmt.

8. Beschlag (20) nach Anspruch 7, wobei die Flansche (60) zwischen dem ersten Abschnitt (51) und dem zweiten Abschnitt (52) aufgeteilt sind, wobei jeder der Abschnitte (51, 52) einen Teil des Flanschabschnitts (61) und einen Satz der Versteifungen (62) umfasst, und wobei, wenn die Abschnitte (51, 52) aneinandergestoßen sind, die gegenüberliegenden Flanschabschnitte aneinanderstoßen und einen einzelnen Flanschabschnitt (61) bilden.

9. Beschlag (20) nach Anspruch 7 oder 8, wobei die Versteifungen (62) entlang des Flanschabschnitts (61) beabstandet sind, wobei sich die Versteifungen (62) lateral nach außen weg von dem Flanschabschnitt (61) erstrecken und eine sich verjüngende Höhe aufweisen, die sich weg von dem Flanschabschnitt (61) verringert.

10. Beschlag (20) nach einem der Ansprüche 1 bis 9, der ferner eine Verbindungsstelle (53) aufweist, wobei der erste Abschnitt (51) und der zweite Abschnitt (52) aneinanderstoßen, wobei sich die Verbindungsstelle (53) in Längsrichtung durch den Körper (21) erstreckt.

11. Beschlag (20) nach Anspruch 10, wobei sich Flansche (60) entlang einer oder mehrerer Seiten des Körpers (21) erstrecken, wobei die Flansche (60) eingerichtet sind, eine strukturelle Schnittstelle zu bilden, die sowohl Schub- als auch Zugbelastungen über die Verbindungsstelle (53) hinweg aufnimmt.

12. Beschlag (20) nach einem der Ansprüche 1 bis 11, wobei die erste Tasche (28) eine Breite (W), gemessen zwischen gegenüberliegenden Seiten, aufweist, wobei sich die Breite (W) in Richtung des vorderen Endes (22) verringert.

13. Beschlag (20) nach einem der Ansprüche 1 bis 12, wobei die lateralen Seiten flach sind, um sich mit Halterungen eines hinteren Triebwerksbefestigungsbeschlags (40) zu verbinden.

14. Beschlag (20) nach einem der Ansprüche 1 bis 13, wobei der Beschlag (20) ferner Befestigungseinrichtungen (110) aufweist, die sich durch den ersten Abschnitt (51) und den zweiten Abschnitt (52) erstrecken und die diese verbinden.

15. Beschlag (20) nach einem der Ansprüche 1 bis 14, wobei sich die Befestigungseinrichtungen (110) durch den ersten und zweiten Abschnitt (51, 52) erstrecken und die Verbindungsstelle (53) überbrücken, wobei jeder der Abschnitte (51, 52) einen Teil eines Flanschabschnitts (61) umfasst, wobei sich die Befestigungseinrichtungen (110) durch die Flanschabschnitte (61) erstrecken und die Abschnitte (51, 52) miteinander verbinden, und wobei die Befestigungseinrichtungen (110) senkrecht zu der Verbindungsstelle (53) ausgerichtet sind.

## Revendications

1. Ferrure (20) destinée à monter un moteur (103) sur une aile (102) d'un aéronef, la ferrure (20) comprenant :
une première section (51) et une seconde section (52) comprenant chacune :
un côté latéral ;
un côté supérieur ;
un côté inférieur ;
un côté intérieur ;
dans laquelle la première section (51) et la seconde section (52) sont conçues pour être reliées l'une à l'autre le long des côtés intérieurs pour former un corps (21), le corps (21) comprenant :
un premier côté formé par le côté latéral de la première section (51) ;
un deuxième côté formé par le côté latéral de la seconde section (52) ;
un troisième côté formé par les côtés supérieurs de la première section (51) et de la seconde section (52) ; et
un quatrième côté formé par les côtés inférieurs de la première section (51) et de la seconde section (52),
la ferrure (20) comprenant en outre un espace intérieur (29) positionné à l'intérieur du corps (21), l'espace intérieur comprenant une première poche (28) positionnée à une première extrémité du corps (21) pour recevoir une ferrure de fixation de moteur avant (30) et une seconde poche (89) positionnée à une seconde extrémité du corps (21) pour recevoir un caisson de mât (104) de l'aile (102).

2. Ferrure (20) selon la revendication 1, dans laquelle la première poche (28) et la seconde poche (89) sont chacune entourées par la première section (51) et la seconde section (52).

3. Ferrure (20) selon la revendication 1 ou 2, dans laquelle la première section (51) est une image en miroir de la seconde section (52).

4. Ferrure (20) selon l'une quelconque des revendications 1 à 3, comprenant en outre des nervures (70) qui s'étendent vers l'extérieur depuis des faces intérieures des côtés latéraux de la première section (51) et de la seconde section (52), les nervures (70) ayant des extrémités exposées qui viennent en butée les unes contre les autres lorsque la première section (51) et la seconde section (52) sont reliées ensemble.

5. Ferrure (20) selon la revendication 4, dans laquelle les nervures (70) s'étendent vers l'extérieur depuis des côtés opposés et à travers l'espace intérieur (29).

6. Ferrure (20) selon la revendication 4 ou 5, dans laquelle les nervures (70) sont positionnées selon différentes orientations qui s'étendent vers l'extérieur depuis la face intérieure du côté latéral (26) de la première section (51), dans laquelle des poches (54) sont formées au niveau des nervures (70).

7. Ferrure (20) selon l'une quelconque des revendications 1 à 6, comprenant en outre des brides (60) qui s'étendent vers l'extérieur depuis le corps (21) et comprenant une section de bride (61) et des raidisseurs latéraux (62), les brides (60) sont conçues pour former une interface structurelle qui supporte à la fois le cisaillement et la traction.

8. Ferrure (20) selon la revendication 7, dans laquelle les brides (60) sont réparties entre la première section (51) et la seconde section (52), chacune des sections (51, 52) comporte une partie de la section de bride (61) et un ensemble des raidisseurs (62), et lorsque les sections (51, 52) sont mises en butée l'une contre l'autre, les sections de bride opposées viennent en butée l'une contre l'autre et forment une section de bride unique (61).

9. Ferrure (20) selon la revendication 7 ou 8, dans laquelle les raidisseurs (62) sont espacés le long de la section de bride (61), dans laquelle les raidisseurs (62) s'étendent latéralement vers l'extérieur en s'éloignant de la section de bride (61) et ont une hauteur décroissante à mesure qu'ils s'éloignent de la section de bride (61).

10. Ferrure (20) selon l'une quelconque des revendications 1 à 9, comprenant en outre un joint (53) dans laquelle la première section (51) et la seconde section (52) viennent en butée l'une contre l'autre avec le joint (53) s'étendant longitudinalement à travers le corps (21).

11. Ferrure (20) selon la revendication 10, dans laquelle des brides (60) s'étendent le long d'un ou plusieurs côtés du corps (21), dans laquelle les brides (60) sont conçues pour former une interface structurelle qui supporte à la fois des charges de cisaillement et de traction à travers le joint (53).

12. Ferrure (20) selon l'une quelconque des revendications 1 à 11, dans laquelle la première poche (28) présente une largeur (W) mesurée entre des côtés opposés, dans laquelle la largeur (W) diminue vers l'extrémité avant (22).

13. Ferrure (20) selon l'une quelconque des revendications 1 à 12, dans laquelle les côtés latéraux sont plats pour être reliés à des pattes d'une ferrure arrière de fixation de moteur (40).

14. Ferrure (20) selon l'une quelconque des revendications 1 à 13, la ferrure (20) comprenant en outre des éléments de fixation (110) qui s'étendent à travers et relient la première section (51) à la seconde section (52).

15. Ferrure (20) selon l'une quelconque des revendications 1 à 14, dans laquelle les éléments de fixation (110) s'étendent à travers les première et seconde sections (51, 52) et franchissent le joint (53), chacune des sections (51, 52) comporte une partie d'une section de bride (61), les éléments de fixation (110) s'étendent à travers les sections de bride (61) et relient les sections (51, 52) ensemble, et les éléments de fixation (110) sont alignés perpendiculairement au joint (53).
